# EUROPEAN PATENT SPECIFICATION

(11) **EP 4 091 973 B1**
(45) Date of publication and mention of the grant of the patent: **14.02.2024**
(21) Application number: 22173934.5
(22) Date of filing: 18.05.2022
(51) Int. Cl.: B65G 69/00

(54) **CHOCKING APPARATUS WITH SLACKING SURVEILLANCE**
VERKEILUNGSVORRICHTUNG MIT LOCKERUNGSÜBERWACHUNG
APPAREIL DE CALAGE AVEC SURVEILLANCE DE RELÂCHEMENT

(30) Priority: 19.05.2021 SE 2150638
(43) Date of publication of application: 23.11.2022
(73) Proprietor: Bergström, Lars, 791 91 Falun SE (SE)
(72) Inventor: Bergström, Lars, 791 91 Falun SE (SE)
(74) Representative: AWA Sweden AB

(56) References cited:
- WO-A1-2004/078618
- WO-A1-2009/032372
- US-A1- 2003 159 892

## Description

### TECHNICAL FIELD

The present technology relates in general to arrangements and methods for blocking movements of vehicles, and in particular to safety aspects of such arrangements and methods.

### BACKGROUND

During loading and unloading of trucks and trailers, in particular when such loading/unloading is carried out by means of fork-lift trucks at a loading dock or loading bay, there is a risk for accidents. Typically, a fork-lift truck may be driven onto the loading bed of the truck or trailer through a swingable ramp or leveler that is normally anchored at the loading dock. The truck and its load often weigh several tons and there is an apparent risk that a vehicle only being blocked with its parking brake will be displaced when driving onto the truck bed or the ramp. Ice, snow or loose gravel may increase these risks.

Traditionally, road freight vehicles and/or their load carriers (such as trailers or semi-trailers) are therefore typically secured in position at a loading dock through chocking by means of loose wedges or chocks that are positioned in front of one or several wheels of the vehicle or load carrier. Such traditional chocking suffers from many drawbacks. Manual positioning and securing of chocks always involve a certain degree of uncertainty, depending on the experience of the drives. Furthermore, no immediate indication can be given to the forklift driver when the chock is in place and whether they are placed properly.

Fixed devices have also been developed for blocking one or several vehicle wheels in association with loading and unloading. These known devices include those that are rigidly connected to the driveway or truck parking surface or that are alternatively embedded in said driveway or truck parking surface. However, there are problems e.g. with snow clearance work, and they typically require a high accuracy in positioning the vehicle in front of the loading dock.

In the publication of the international patent application WO 2004/078618 A1, a chocking apparatus is disclosed. The apparatus for locking a vehicle at a loading dock comprises a telescopic arm that at one end is supported so as to be stationary but is pivotal about two axes. The opposite end is provided with an engagement means for effecting a blocking connection between the vehicle and the area of a loading dock. At the same time as the stationary end may be provided at a safe position where it is practically completely out of the way when it comes to e.g. snow clearance and risk of being run into, the capability of pivotal movement and the telescopic design of the arm makes it possible to easily maneuver the engagement means into a blocking or restraining engagement from the outside of the vehicle. When such an engagement means is provided in the accurate position in connection with a wheel of the vehicle, safe loading/unloading can be performed.

However, vibrations and different forces applied on the vehicle during the loading/unloading process may slowly change the exact position of the vehicle wheel. This means that, after some time, the blocking action of the engagement means might not be optimally efficient. In particular when there is snow, ice and/or loose gravel at the ground, minor movements of the vehicle wheel may occur, resulting in e.g. a too loose connection. Safety conditions may therefore be affected. If the relative positions of the telescopic arm is actuated by means of applying a hydraulic piston and cylinder assembly, any remaining pressure difference may compensate for some minor movements, but then on expense of the force by which the vehicle is kept in position.

It is therefore requested to provide devices and methods for discovering and potentially attend to such safety risks.

### SUMMARY

A general object is thus to provide devices and methods for improving the safety in connection with loading/unloading of road freight vehicles at a loading dock.

The above object is achieved by methods and devices according to the independent claims. Preferred embodiments are defined in dependent claims.

In general words, in a first aspect, a chocking apparatus for preventing unintentional movement of a road freight vehicle in association with loading/unloading at a loading dock comprises a telescoping arm that is extendable and retractable, respectively. The telescoping arm comprises a first member telescopically displaceable with respect to a second member. The chocking apparatus further comprises displacement driving means arranged for moving the first member telescopically in relation to the second member. The chocking apparatus also comprises an arm support, to which a first end of the telescoping arm being attached and a chock, attached to a second end, opposite to the first end, of the telescoping arm. The chocking apparatus further comprises an arm tension detecting system configured for obtaining a tension-related measure representing a tension in said telescoping arm. The chocking apparatus further comprises a control system connected to the arm tension detecting system and configured for activating a safety routine in dependence of the tension-related measure. The control system is configured for activating the displacement driving means for retracting the telescoping arm if the tension-related measure falls outside a predetermined range.

In a second aspect, a method for operating a chocking apparatus for preventing unintentional movement of a road freight vehicle in association with loading/unloading at a loading dock comprises operating displacement driving means arranged for moving a first member of a telescoping arm telescopically with respect to a second member of the telescoping arm. The telescoping arm that is extendable and retractable, respectively, and is by a first end attached to an arm support. A chock is attached to a second end, opposite to the first end, of the telescoping arm. A tension-related measure representing a tension in said telescoping arm is detected. A safety routine is activated in dependence of the tension-related measure. The safety routine comprises retracting of the telescoping arm if the tension-related measure falls outside a predetermined range.

One advantage with the proposed technology is that a higher degree of safety can be achieved upon loading/unloading of road freight vehicles. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is a schematic drawing of an embodiment of a chocking apparatus;
FIG. 2 is a cross-sectional view of a part of an embodiment of a telescoping arm;
FIG. 3 is a schematic drawing of an embodiment of a connection between a telescoping arm and an arm support, when being unloaded;
FIGS 4A-D are schematic drawings of the procedure for chocking wheels of a road freight vehicle;
FIG. 5 is a schematic drawing of an embodiment of a connection between a telescoping arm and an arm support, when being loaded;
FIG. 6 is a flow diagram of steps of an embodiment of a method for operating a chocking apparatus;
FIG. 7 is a part flow diagram of part steps of an embodiment of a safety routine activating step;
FIG. 8 is a part flow diagram of part steps of another embodiment of a safety routine activating step;
FIG. 9 is a part flow diagram of steps of another embodiment of a method for operating a chocking apparatus;
FIG. 10 is a schematic drawing of parts of an embodiment of a chocking apparatus; and
FIG. 11 is a schematic drawing of parts of another embodiment of a chocking apparatus.

### DETAILED DESCRIPTION

Throughout the drawings, the same reference numbers are used for similar or corresponding elements.

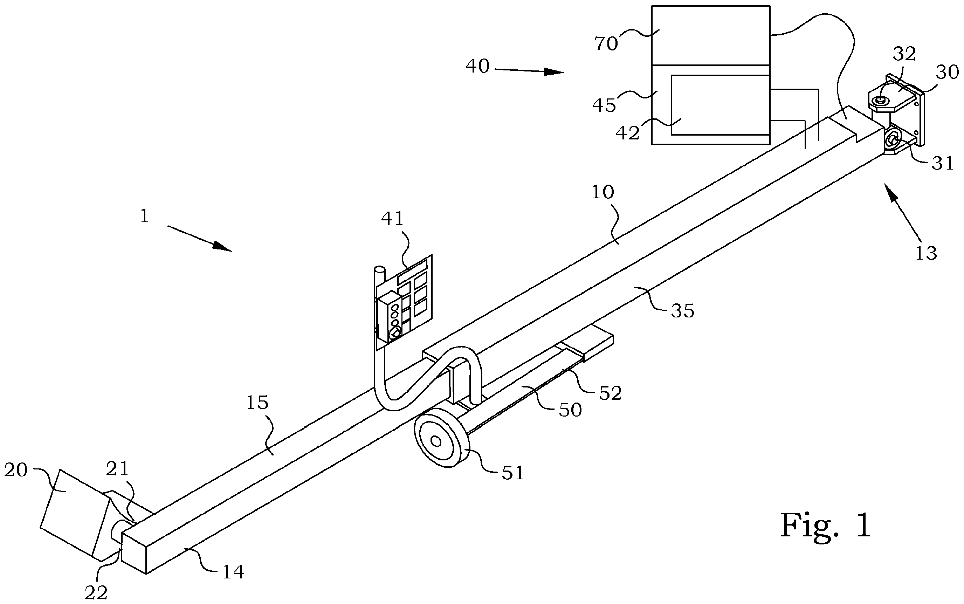

Figure 1 illustrates schematically an embodiment of a chocking apparatus 1. A telescoping arm 10 is attached by a first end 13 to an arm support 30. The arm support is intended to be installed in association with a loading dock for a road freight vehicle. The arm support 30 comprises a vertical pivot connection 31 and a horizontal pivot connection 32, thereby allowing the telescoping arm to be tilted in both a vertical and horizontal direction with respect to the loading dock. A second end 14 of the telescoping arm 10 is connected to a chock 20. The chock 20 is shaped for fitting against a wheel of a road freight vehicle. The chock 20 is connected by a rotatable connection 21 and a pivotable connection 22 in order to admit minor direction adjustments of the chock 20 with respect to the telescoping arm 10. A wheel arrangement 50 is connected to a first tube 35, in turn attached to the pivotable parts of the arm support 30. A wheel 51 is supported on a leaf spring 52 to support the first tube 35 on the ground.

The telescoping arm 10 is extendable and retractable, respectively. As will be discussed more in detail below, the telescoping arm 10 comprises a first member that is telescopically displaceable with respect to a second. In the figure, the first member is covered by the first tube 35 and the second member is covered and attached to a second tube 15. A displacement driving means 40 is arranged for moving the first member telescopically in relation to the second member. In this particular embodiment, the displacement driving means comprises a hydraulic system 45 having a pressurizing device 42. The pressurizing device is configured for providing pressure differences between different sealed volumes between a cylinder and a piston, thereby actuating on first and second members for changing their relative telescopic positions.

A control system 70 is connected to the displacement driving means 40 and to an operator display 41. The operator display 41 allows an operator to drive the chocking apparatus 1 and to observe different kinds of signaling from the system.

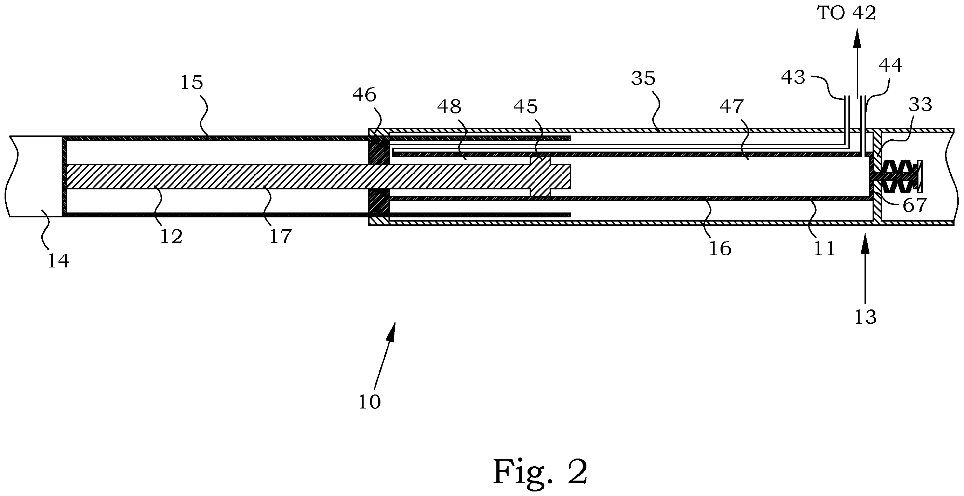

Figure 2 show a schematic cross-sectional view of an embodiment of a telescopic arm 10. A first member 11 is telescopically arranged with respect to a second member 12. In this particular embodiment, the first member comprises a cylinder 16 and the second member 12 comprises a piston 17. The piston 17 is arranged with sealings 45 and 46 against and inside the cylinder 16. The outer end of the piston 17 is at the second end 14 of the telescopic arm 10 attached to the second tube 15. Pressurizing connections 43, 44 are provided from the pressurizing unit 42 to volumes 47, 48 between the piston 17 and the cylinder 16. By applying pressure differences between the volumes 47, 48, forces can be applied on the piston 17 to be moved relative the cylinder 16. Depending on whether the highest pressure is provided in the volume 47 or 48, the force on the piston can be directed towards the second end 14 or towards the first end 13. The first tube 35 is attached to the arm support 30, and serves as a guide for the second tube 15. Upon moving the piston 17, the second tube 15 moves within the space between the first tube 35 and the cylinder 16. The bottom of cylinder 16, i.e. at the first end 13, is attached to a supporting plate of the arm support 30 by a spring arrangement, described below.

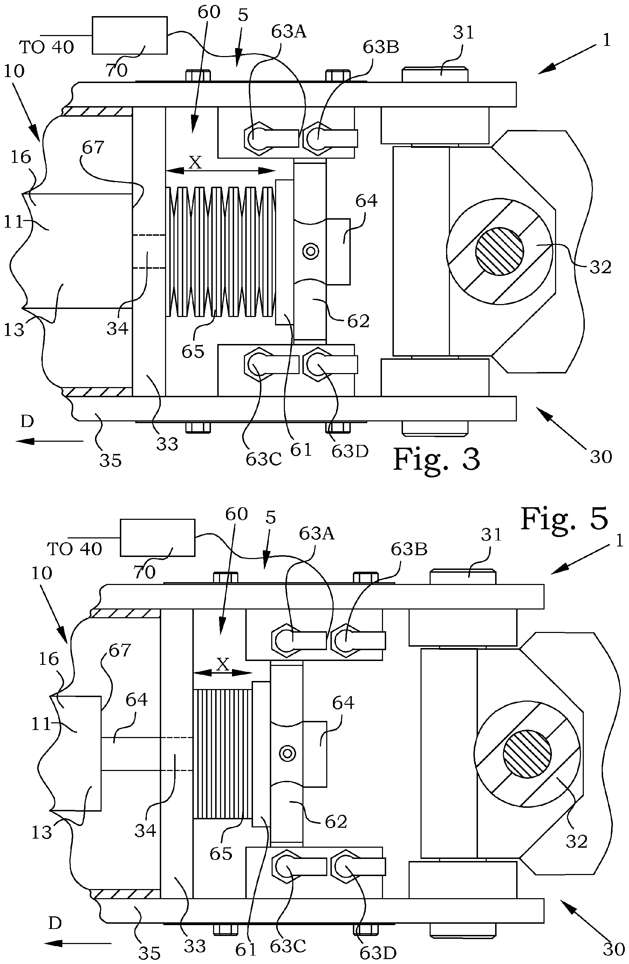

In Figure 3, an embodiment of an attachment of the first member 11 of the telescopic arm 10 to the arm support 30 is illustrated schematically. Here, an arm tension detecting system 5 is provided. The arm tension detecting system 5 is configured for obtaining a tension-related measure representing a tension in the telescoping arm 10. In this embodiment, the arm tension detecting system 5 comprises a spring arrangement 60. The first end 13 of the telescoping arm 10 is attached to the arm support 30 via the spring arrangement 60. The spring arrangement 60 is configured for counteracting a displacement of the first end 13 of the telescoping arm 10 in the direction D towards the second end of the telescoping arm 10.

In this embodiment, the first member 11, i.e. here the cylinder 16, is at the first end 13 provided with an end stop surface 67 from which a shaft 64 extends. The arm support 30 has a support plate 33 with a hole 34. The shaft 64 is slidably arranged through the hole 34. The shaft 64 has furthermore a spring stopper 61 arranged at a distance X from the stop surface 67. A number of disc springs 65 are mounted between the spring stopper 61 and the support plate 33 of the arm support 30. The spring arrangement 60 thereby counteract any displacement of the first end 13 of the telescoping arm away from the support plate 33 by means of the action of the disc springs 65. When the chocking apparatus is unloaded, the disc springs 65 thereby hold the end stop surface 67 against the support plate 33.

In this embodiment, the arm tension detecting system 5 further comprises a first position sensor 63A. The first position sensor 63A is provided at the arm support 30. The first position sensor 63A is configured for detecting if a relative position between the first end 13 and the arm support 30 is within a predetermined range. In the present embodiment, the first position sensor 63A is attached at the inside of the continuation of the first tube 35 and is arranged for sensing if an indexing member 62 on the shaft 64 is in the vicinity. In this embodiment, a second sensor 63B is also provided at the arm support 30, somewhat displaced from the first sensor 63A in the direction away from the second end. The second position sensor is configured for detecting the relative position between the first end 13 and the arm support 30 in another range than the first position sensor 63A. Preferably, as will be discussed further below, the indexing member 62 of the shaft 64 is placed in front of the second position sensor 63B when the chocking apparatus is unloaded, i.e. in the situation illustrated in Figure 3.

In this particular embodiment, a spare first position sensor 63C and a spare second position sensor 63D are also provided at the opposite side of the arm support 30. These sensors are provided as a redundancy if any of the other sensors are malfunctioning.

The position sensors used in this context can be of essentially any type. An inductive sensor, sensing the distance between the sensor and the indexing member, is presently believed to be a well operating example. However, other types of position sensing techniques can also be used, for example, but not limited to magnetic sensing, capacitive sensing, optical sensing and sound sensing.

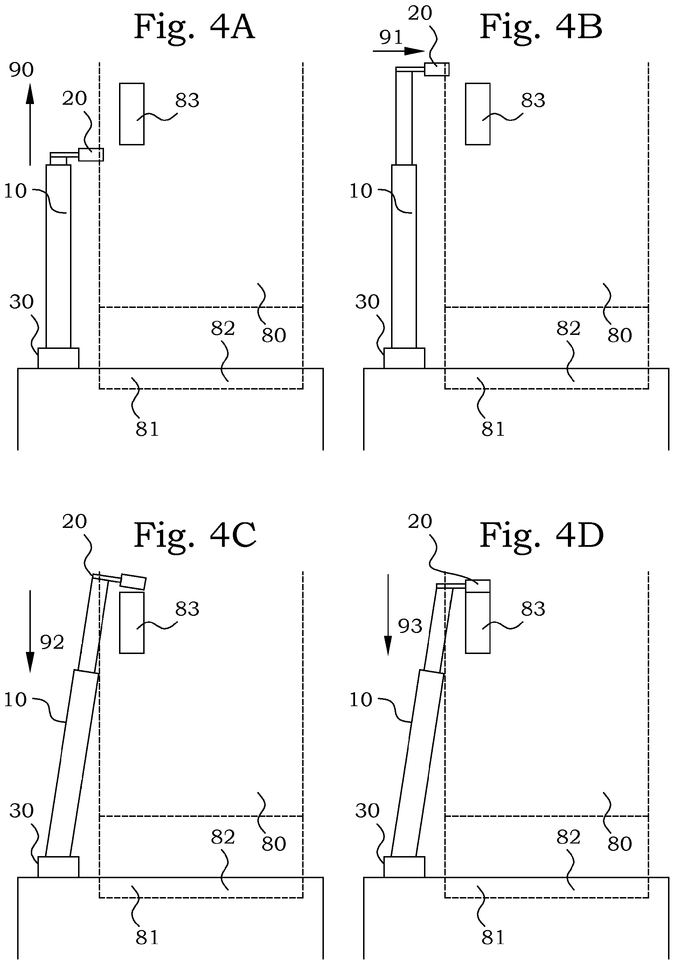

Figures 4A-D schematically illustrates an embodiment of a general procedure for clamping a road freight vehicle 80. The road freight vehicle 80 indicated by dotted lines is parked in front of a loading dock 82. A ramp 81 connects the road freight vehicle 80 and the loading dock 82. A wheel 83 of the road freight vehicle 80 is intended to be chocked. In Figure 4A, the chocking apparatus 1 is attached to the loading dock 82 in a retracted condition. The chocking apparatus 1 is operated such that the telescopic arm is extended in the direction denoted by the arrow 90 besides the wheel 83. In Figure 4B, the chock 20 has passed the wheel and the entire telescopic arm 10 is not pushed sidewards in the direction denoted by the arrow 91 so that the chock 20 is placed just behind the wheel 83, as illustrated in Figure 4C. Now the chocking apparatus 1 is operated again, now in a retracting mode, to pull the chock towards and in contact with the wheel 83, in the direction denoted by the arrow 92. In Figure 4D, the chocking apparatus 1 is continued to be operated for retracting the telescopic arm 10. However, since the wheel 83 is placed in the way for the chock 20, no further movement of the chock 20 is possible.

Instead a force 93 is built up pushing the chock 20 against the wheel for a safe chocking action.

Since the first end of the telescopic arm is attached by the spring arrangement to the arm support 30, the force 93 will act on the telescopic arm 10. The telescopic arm 10 will then move away from the arm support 30 until a spring force is built up in the spring arrangement that is equal to the applied force 93. This will be discussed more in detail below.

Figure 5 illustrates a similar embodiment as in Figure 3, but in a loaded state, i.e. when a chock is pushed with a predetermined force against a wheel. It can now be seen that the first end 13 is displaced somewhat in the direction D compared to Figure 3, since the telescopic arm 10 is exposed for a certain force. Consequently, the spring stopper 61 and the indexing member 62 are also displaced by the same amount, resulting in a compression of the disc springs 65. The displacement is essentially proportional to the applied force, and at a stead state, the compression of the disc springs 65 will give rise to a counteracting force of a same magnitude, balancing the forces. The indexing member 62 is now placed in front of the first position sensor 63A. The first position sensor 63A can then detect the presence of the indexing member 62 and determine that there is a relative displacement between the first end 13 and the arm support 30 within a predetermined range. This means that a suitable force is applied on the chock and loading/unloading of the vehicle can now be performed without risks. The relative position between the first end 13 and the arm support 30 is thereby in this embodiment considered as the tension-related measure. The movement of the indexing member 62 is directly associated with the tension in the telescoping arm 10 and the relative position then constitutes a measure of such a tension.

If the situation changes, e.g. by action of vibrations or external forces, the wheel may be moved. If the wheel is moved towards the loading dock, the chock may follow, due to the force applied to it. However, the resulting force between the chock and the wheel after the moving is typically reduced. Such a reduction is contact force will also result in a corresponding decrease of the force at the first end 13 of the telescopic arm 10, in turn resulting in that the first end 13 of the telescopic arm 10 will be displaced somewhat away from the second end. If such a decrease of the forces and thus displacement in the arm support is large enough, the safety of the chocking action is questioned. This situation can, however, be detected by the first position sensor 63A, discovering that the indexing member 62 no longer is in the requested relative position range. Safety routines may therefore be taken as a result of the findings of the first position sensor 63A, i.e. in dependence of the detected relative position between the first end 13 and the arm support 30. Such functionality can easily be implemented in a control system, as will be described further below.

Likewise, the second position sensor 63B can be utilized to detect that the relative position between the first end 13 and the arm support 30 is according to the expectations. Failures in operation prohibiting a correct operation of the telescopic arm may lead to the expected starting position is not reached. An indication from the second position sensor 63B that the correct position is not reached may be used to alert the operator to start a failure investigation before starting the entire chocking operation.

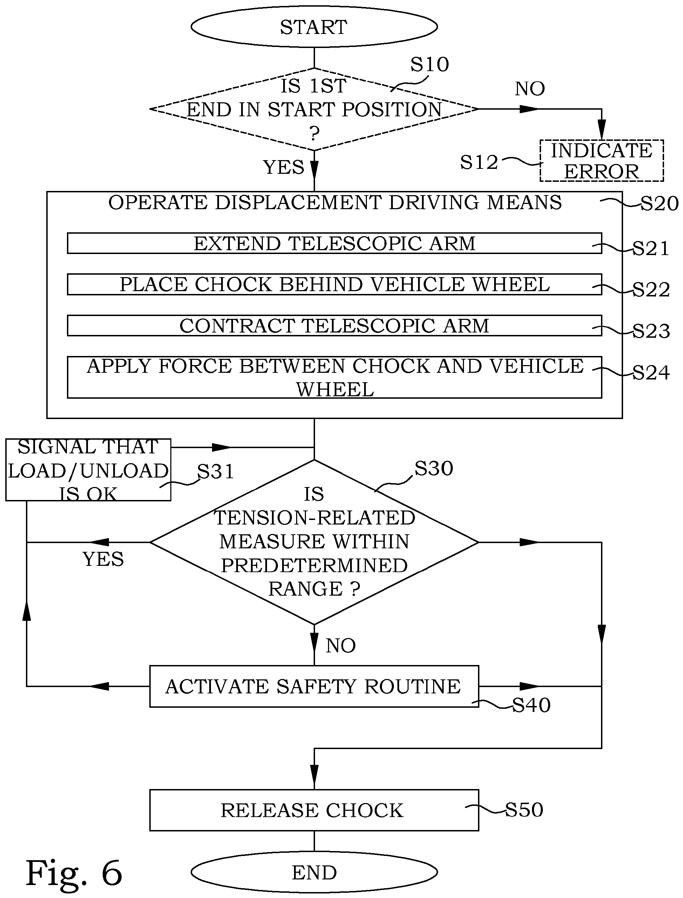

Figure 6 is a flow diagram of steps of an embodiment of a method for operating a chocking apparatus for preventing unintentional movement of a road freight vehicle in association with loading/unloading at a loading dock. In an optional step S10, which may be performed e.g. if there is a second position sensor, it is determined if the first end of the telescopic arm is in a correct initial position relative the arm support. If it is found that position is non-correct, the flow may continue to step S12 in which an indication of an error state is signaled. With reference to Figure 1, the operator display 41 is advantageously used for such signaling purposes. A red light or a warning message in a display may indicated for the operator that the equipment is not in order to be used, and that some kind of fault investigation is recommended. Returning to Figure 6, if the initial position is found to be correct, the procedure continues to step S20.

In step S20, a displacement driving means is operated for telescopically moving the first member of the telescoping arm in relation to the second member of said telescoping arm. The step S20 typically comprises a number of part steps. In step S21, the telescopic arm is extended to position the chock beyond the vehicle wheel to be chocked. In step S22, the chock is placed right behind tS50he vehicle wheel. In step S23, the telescopic arm is contracted until the chock comes into contact with the vehicle wheel. In step S24, a force is applied between the chock and the vehicle wheel. Such actions are by advantage performed by an operator, e.g. using an operator display 41 (Fig. 1).

In step S30, it is determined whether the tension-related measure, e.g. the relative position of the first end of the telescopic arm with respect to the arm support, is within a predetermined range. If this is the case, the process continues to step S31, in which it is signaled that loading/unloading can be performed. This signaling may for instance be a light signal, a sound signal, and/or a message at an operator screen. The process then continues back to the determining step S30 and the process can be repeated until the chock is to be released in step S50.

If it is concluded in step S30 that the tension-related measure, e.g. the relative position of the first end of the telescopic arm with respect to the arm support, is outside the predetermined range, the process continues to a step S40, in which a safety routine is activated. The details of this safety routine may be different depending on which additional information that may be available and on the nature of the mechanical parts. Some examples are discussed here below. If the safety routines are successful, the process may return to step S30, otherwise, loading/unloading may have to be stopped.

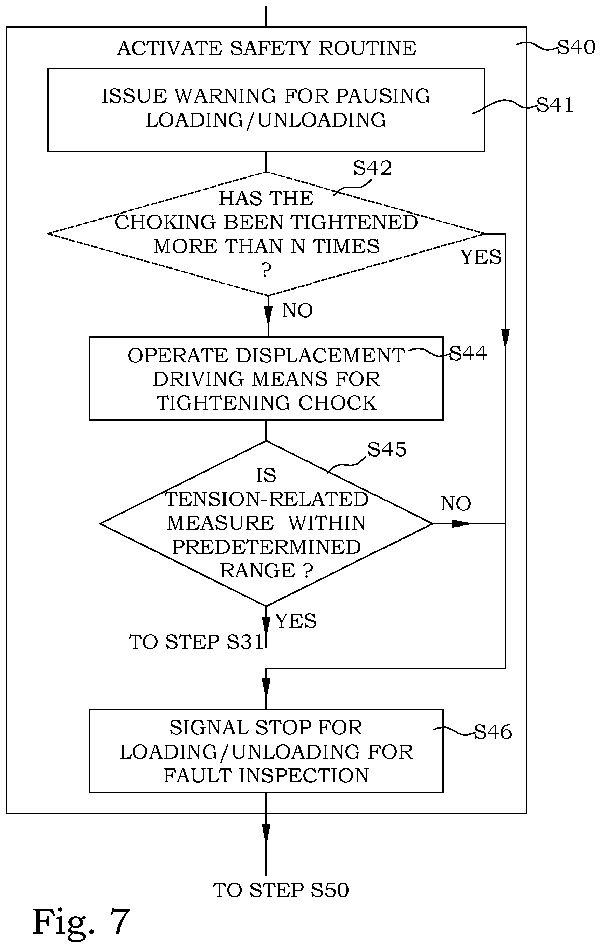

Figure 7 illustrates a part flow diagram of part steps of an embodiment of step S40 of Figure 6. The activation of the safety routines may start with step S41 in which a warning is issued to the operator and/or loading/unloading personnel that the safety may be questioned, and that loading/unloading should be paused, at least temporarily. In step S44, the displacement driving means is operated for tightening the chock against the vehicle wheel. This may be performed manually or automatically. If the wheel has moved and this was the cause of that the first end of the telescoping arm was not within the allowed range, a further tightening by use of the displacement driving means may compensate for the wheel displacement. In step S45, it is checked whether this tightening action had the requested result in bringing back the tension of the telescoping arm, e.g. indicated by the position of the first end of the telescoping arm, into the allowed range. If the measures were successful, the process can return to step S31 and the loading/unloading can start again. If the tightening action did not result in bringing tension-related measure, e.g. the first end of the telescoping arm, into the allowed range, there has to be additional problems with the equipment, and loading/unloading should be stopped until such problems are identified and solved. The proceed thereby continues to step S46, where a stop for loading/unloading for fault inspection is signaled to the operator or personnel performing loading/unloading. The process then continues to step S50, when it is determined that loading/unloading personnel has exited the vehicle.

An optional step S42 may be introduced after the issue of the warning of the pausing. In this step, the number of tightening actions is kept on track and when more than a predetermined number of tightenings are performed, the process will continue directly to step S46. This measure can be useful if e.g. the ground is extremely slippery, and the vehicle continues to slide relatively large distances. It may then be wise to counteract the properties of the ground and repark the vehicle before the loading/unloading is continued. In step S42, it is thus checked whether choking has been tightened mor than N times. If that is the case, step S46 will follow. Otherwise, a new tightening is allowed.

The number N can for instance be selected with respect to the width of the allowed rang for the first end, the degree of safety that is intended to be used.

If the displacement driving means comprises a hydraulic system, there are typically monitors for monitoring the pressures in difference volumes within the telescoping arm. Such pressure monitors can be used to determine a pressure difference between the volumes. Such a measure can preferably also be used to further improve the safety routines.

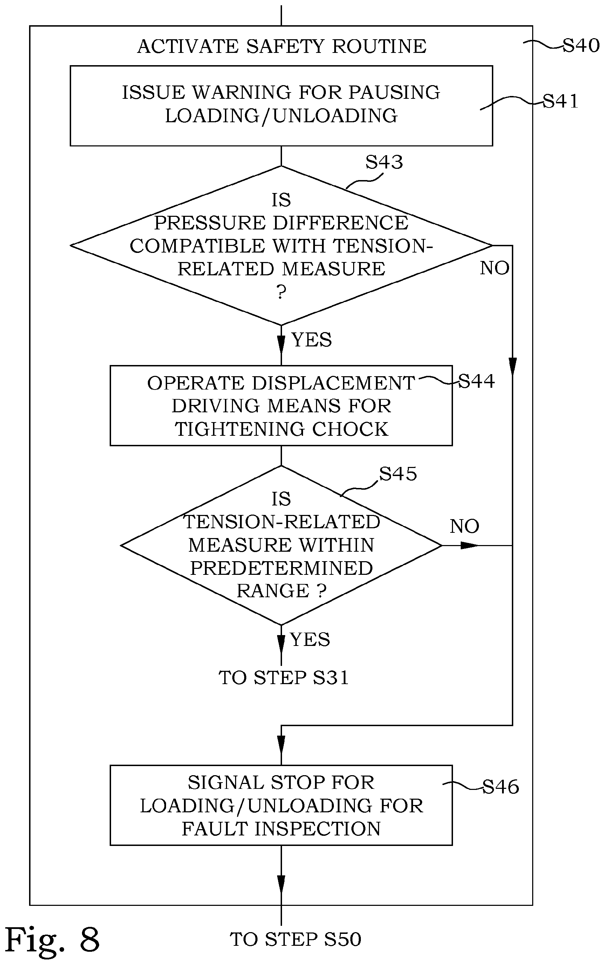

Figure 8 illustrates a part flow diagram of part steps of another embodiment of step S40 of Figure 6. Here, after step S41 where the warning is issued, a step S43 is introduced, in which it is determined if measured pressure differences in the hydraulic system are compatible with the tension-related measure, e.g. the first end position. In a properly working system, a reduction of the tension in the telescopic arm, e.g. indicated by displacement of the first end of the telescoping arm, is typically an indication of that the force on the wheel has been reduced. Such a reduction would also be seen as a reduction of the pressure difference within the hydraulic system. If these two changes are compatible, the telescoping arm is probably in good order and the process can continue to step S44.

However, since there are moving part involved, different kinds of faults can occur. If , for instance, the piston is not allowed to move relative the cylinder in a smooth manner, a release of the force that the cylinder/piston arrangement is to deliver to the chock may instead be compensated by a force between the cylinder and piston. In such a case, the pressure difference in the hydraulic system may not be changed or may not be changed in the expected degree if the force between the chock and the wheel decreases. However, the tension in the telescoping arm changes, e.g. indicated by a motion of the first end of the telescopic arm, and might come outside the allowed range. Thus, if the tension-related measure and the pressure difference behavior do not agree, this might be a sign of that the telescoping arm arrangement may have a malfunctioning, and a fault inspection is recommended.

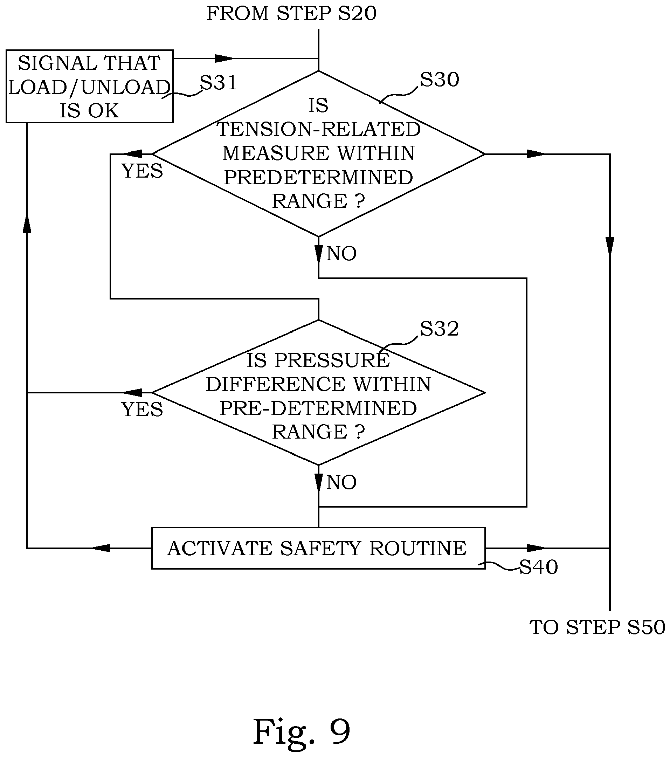

Figure 9 illustrates a part flow diagram of steps of another embodiment of a method for operating a chocking apparatus for preventing unintentional movement of a road freight vehicle in association with loading/unloading at a loading dock. In this embodiment, if it is determined in step S30 that the tension-related measure, e.g. the first end position, is within the predetermined range, the process continues to a step S32. In this step, the pressure differences in the hydraulic system are checked to conclude if there are any out-of range operation. If the pressure differences are within the acceptable predetermined ranges, loading/unloading may be continued, and the process continues to step S31. However, if the pressure differences are outside the predetermined allowed range, the safety routines of step S40 can be activated.

This embodiment may detect faults in the system that depends on e.g. a faulty mechanical interaction between the cylinder and different members attached to the arm support. If, for instance, the spring arrangement is made according to the Figures 3 and 5, there might be a slight risk for the shaft to get stuck in the hole of the support plate. In such a case, the wheel may be displaced and release some of the force from the telescopic arm, without causing a displacement of the indexing member. However, if the piston and cylinder operates correctly, there will be a decrease in the pressure differences, which then can be used to indicate need for actions. The mechanically based position sensing system and the hydraulically based pressure system can thus be utilized as complementary sources of information for creating a safe loading/unloading situation.

The actual design and operation of the telescoping arm can be altered in many different ways. One obvious alternative is to use a pneumatic system instead. The functions for such a system are basically analogue to the hydraulic case.

It is also for instance possible to base the displacement driving means on mechanical driving of the telescoping movement. In a simple design, a lever arrangement or a crank arrangement, preferably combined with different kinds of ratchet mechanisms, may allow a fully manual operation of the displacement driving means.

Mechanical driving may also be provided e.g. by different kinds of motor systems. An electrical motor may easily be adapted to drive the telescoping movement of the telescoping arm. When the requested force has been reached, the relative positions of the first and second members may be mechanically fixed, by different latching arrangements. In other words, the displacement driving means is a mechanical system, whereby the displacement driving means further comprises a motor, configured for providing a relative motion between the first member of the telescopic arm and said second member of the telescopic arm.

In one embodiment, the control system is connected also to the displacement driving means, wherein the control system is configured for activating the safety routine in further dependence of operation conditions of the motor.

Similarly, the detailed design of the spring arrangement can be varied in many ways, still providing the same or corresponding functions. The type of springs can of course be different, and the spring force balancing the force by which the chock is affected can be provided by expansion of springs instead of compression.

Also the position detection can be provided in many different way, known as such in prior art. Electrically and/or magnetically based detection, such as using conductive or inductive sensors can be utilized, as well as many types of optically based systems may easily be adapted to measure a relative position between the first end of the telescopic arm and the arm support. Even fully mechanical solutions of sensors are feasible. Since it only is the relative position between the first end of the telescoping arm and the arm support that has to be monitored, the actual place where measurements are made may differ.

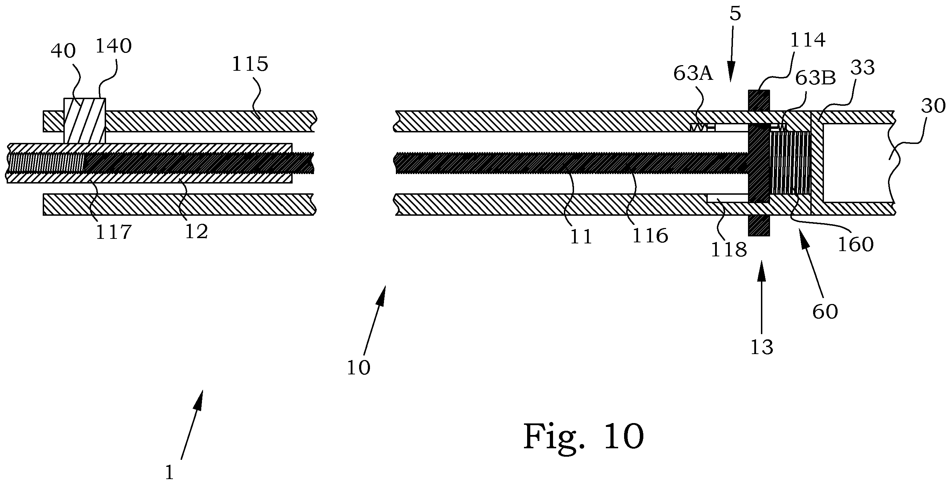

Figure 10 illustrates schematically parts of another embodiment of a chocking apparatus 1. In this embodiment, the telescoping arm 10 comprises a first member 11 comprising a threaded rod 116 attached to an end plate 114 at the first end 13. The end plate is provided with holes, through which two guiding rails 115 are provided. The guiding rails 115 are provided with recesses 118 in which a part of the end plat 114 fits. The end plate 114 is firmly attached to one end of a coil spring 160, constituting the spring arrangement 60. The other end of the coil spring 160 is attached to a support plate 33 of the arm support 30. The coil spring 160 is dimensioned to provide a small pulling force on the end plate 114 when the telescopic arm is not in use, ensuring that the end plate 114 rests against a surface of the recesses 118 positioned nearest the arm support 30. A second member 12 of the telescopic arm 10 is in this embodiment constituted by a threaded cylinder 117, adapted to fit to the threaded rod 116. A displacement driving means 40 comprises a motor 140, e.g. an electrical motor, and is arranged for applying a turning force onto the threaded cylinder 117. By this, a telescopic movement between the first and second members 11, 12 is achieved.

When a chock is placed in connection to a wheel and the electrical motor 140 is operated for retracting the threaded cylinder 117, the result will be that the threaded rod 116 instead moves outwards and may eventually meet the outer surface of the recesses 118. This movement is counteracted by the coil spring 160, which then will be expanded. A first position sensor 63A, in this embodiment constituted by a simple push contact, will detect the presence of the end plate 114. If the chocking force will be reduced, e.g. is the vehicle wheel moves, the coil spring 160 will cause the end plate 114 to be retracted from the first position sensor 63A, and a need for security actions may be detected. A second position sensor 63B is provided at the opposite side of the recess 118 and detects if the end plate is positioned in a start position.

In the above described embodiments, the arm tension detecting system (5) has been based on a spring arrangement and detection of a displacement.

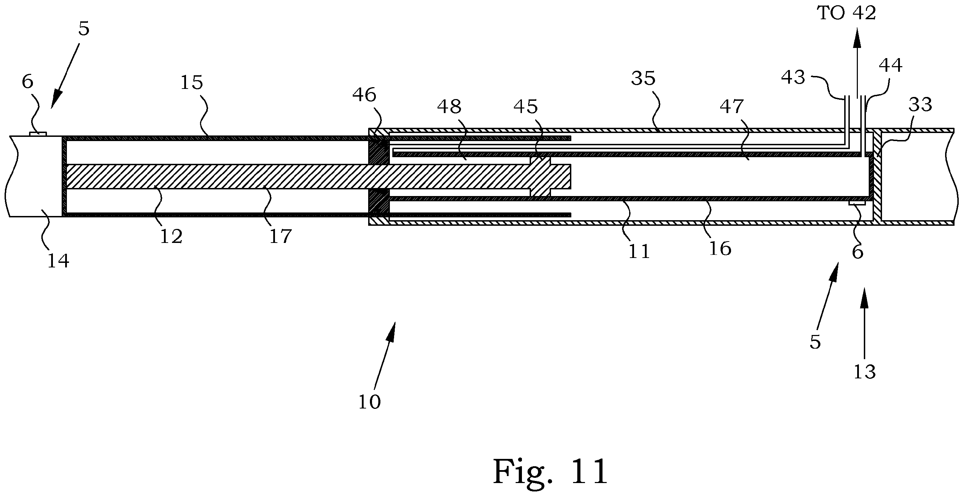

However, more direct detection systems may also be utilized. Figure 11 illustrates schematically a telescoping arm 10 of a chocking apparatus. In this embodiment, the arm tension detecting system 5 comprises a tension sensor 6. In this embodiment, it is intended to use a strain gauge as the tension sensor 6. Two alternative or complementary positions of such tension sensor 6 are indicated, however, the person skilled in the art realizes that many other locations are possible as well. The tension sensor 6 is arranged at the telescoping arm 10 and is configured for determining a strain in the telescoping arm 10 as the tension-related measure.

One of the illustrated locations of the tension sensor is at the second end 14 of the telescoping arm 10. These parts are exposed for essentially the same forces as is applied to the chock. The forces cause the members at the second end 14 to become strained, which is detectable by the strain gauge.

The other illustrated location of the tension sensor is close to the first end 13 of the telescoping arm, in this embodiment at the first member 11, at the outside of the cylinder 16. Also this part will experience the forces that are applied to the chock an corresponding strains will be present.

Any person skilled in the art realizes that the localization of the tension sensors can be selected to many other different parts of the telescoping arm 10.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A chocking apparatus (1) for preventing unintentional movement of a road freight vehicle in association with loading/unloading at a loading dock, comprising:
- a telescoping arm (10) that is extendable and retractable, respectively, comprising a first member (11) telescopically displaceable with respect to a second member (12);
- displacement driving means (40) arranged for moving said first member (11) telescopically in relation to said second member (12);
- an arm support (30), to which a first end (13) of said telescoping arm (10) being attached; and
- a chock (20), attached to a second end (14), opposite to said first end (13), of said telescoping arm (10),
**characterized by**
- an arm tension detecting system (5) configured for obtaining a tension-related measure representing a tension in said telescoping arm; and
- a control system (70) connected to said arm tension detecting system (5) and configured for activating a safety routine in dependence of said tension-related measure;
wherein said control system (70) is configured for activating said displacement driving means (40) for retracting said telescoping arm (10) if said tension-related measure falls outside a predetermined range.

2. The chocking apparatus according to claim 1, **characterized in that**
said arm tension detecting system (5) comprises a spring arrangement (60) and at least a first position sensor (63A; 63C);
said first end (13) of said telescoping arm (10) being attached to said arm support (30) via said spring arrangement (60);
said spring arrangement (60) being configured for counteracting a displacement of said first end (13) of said telescoping arm (10) in the direction (D) towards said second end (14) of said telescoping arm (10), and by further comprising:
- said at least a first position sensor (63A; 63C) being configured for detecting if a relative position between said first end (13) and said arm support (30) as said tension-related measure is within a predetermined range.

3. The chocking apparatus according to claim 1, **characterized in that**
said arm tension detecting system (5) comprises a tension sensor (6);
said tension sensor (6) being arranged at said telescoping arm (10) and configured for determining a strain in said telescoping arm (10) as said tension-related measure.

4. The chocking apparatus according to claim 3, **characterized in that**
said tension sensor (6) is a strain gauge.

5. The chocking apparatus according to any of the claims 1 to 4, **characterized in that** said control system (70) is configured for initiating an issue of a warning signal if said tension-related measure falls outside a predetermined range.

6. The chocking apparatus according to claim 2, **characterized by** a second position sensor (63B; 63D) configured for detecting said relative position between said first end (13) and said arm support (30) in another range than said first position sensor (63A; 63C).

7. The chocking apparatus according to any of the claims 1 to 6, **characterized in that** said displacement driving means (40) is a hydraulic system (45), where said first member (11) of said telescopic arm (10) is a cylinder (16) and said second member (12) of said telescopic arm (10) is a piston (17), whereby said displacement driving means (40) further comprises a pressurizing device (42), configured for providing pressure differences between different sealed volumes between said cylinder (16) and said piston (17).

8. The chocking apparatus according to any of the claims 1 to 6, **characterized in that** said displacement driving means (40) is a pneumatic system, where said first member (11) of said telescopic arm (10) is a cylinder (16) and said second member (12) of said telescopic arm (10) is a piston (17), whereby said displacement driving means (40) further comprises a pressurizing device (42), configured for providing pressure differences between different sealed volumes between said cylinder (16) and said piston (17).

9. The chocking apparatus according to any of the claims 1 to 6, **characterized in that** said displacement driving means (40) is a mechanical system, whereby said displacement driving means (40) further comprises a motor (140), configured for providing a relative motion between said first member (11) of said telescopic arm (10) and said second member (12) of said telescopic arm (10).

10. The chocking apparatus according to claims 7 or 8, **characterized in that** said control system (70) is connected also to said displacement driving means (40), wherein said control system (70) is configured for activating said safety routine in further dependence of said pressure differences in said displacement driving means (40).

11. The chocking apparatus according to claims 9, **characterized in that** said control system (70) is connected also to said displacement driving means (40), wherein said control system (70) is configured for activating said safety routine in further dependence of operation conditions of said motor (140).

12. The chocking apparatus according to any of the claims 1 to 11, **characterized in that** said first end (13) of said telescoping arm (10) comprises an end stop surface (67) from which a shaft (64) extends, said arm support (30) having a support plate (33) with a hole (34), through which said shaft (64) being slidably arranged, and said shaft (64) having a spring stopper (61) arranged at a distance (X) from said stop surface (67) and disc springs (65) mounted between said spring stopper (61) and said support plate (33) of said arm support (30).

13. A method for operating a chocking apparatus for preventing unintentional movement of a road freight vehicle in association with loading/unloading at a loading dock, comprising the step of:
- operating a displacement driving means for telescopically moving a first member of a telescoping arm, being extendable and retractable, respectively, in relation to a second member of said telescoping arm;
said telescoping arm being attached to an arm support by a first end and to a chock by a second end, opposite to said first end, that is comprising a first member telescopically displaceable with respect to a second member; **characterized by** the further steps of:
- detecting a tension-related measure representing a tension in said telescoping arm; and
- activating a safety routine in dependence of said tension-related measure;
wherein said safety routine comprises retracting of said telescoping arm (10) if said tension-related measure falls outside a predetermined range.

14. The method according to claim 13, **characterized in that** said step of activating a safety routine comprises initiating of an issue of a warning signal if said tension-related measure falls outside a predetermined range.

## Patentansprüche

1. Verkeilungsvorrichtung (1) zum Verhindern von ungewollter Bewegung eines Straßenfrachtfahrzeugs in Zusammenhang mit dem Beladen/Entladen an einer Laderampe, aufweisend:
- einen Teleskoparm (10), der ausfahrbar bzw. einfahrbar ist, mit einem ersten Glied (11), das relativ zu einem zweiten Glied (12) teleskopisch verfahrbar ist;
- ein Verfahrantriebsmittel (40), das zum teleskopischen Bewegen des ersten Glieds (11) relativ zu dem zweiten Glied (12) angeordnet ist;
- eine Armhalterung (30), an der ein erstes Ende (13) des Teleskoparms (10) befestigt ist; und
- einen Keil (20), der an einem dem ersten Ende (13) entgegengesetzten zweiten Ende (14) des Teleskoparms (10) befestigt ist, **gekennzeichnet durch**
- ein Armspannungserfassungssystem (5), das zum Ermitteln einer spannungsbezogenen Messung, die eine Spannung in dem Teleskoparm abbildet, ausgebildet ist; und
- ein Steuerungssystem (70), das mit dem Armspannungserfassungssystem (5) verbunden und zum Aktivieren einer Sicherheitsroutine in Abhängigkeit von der spannungsbezogenen Messung ausgebildet ist;
wobei das Steuerungssystem (70) zum Aktivieren des Verfahrantriebsmittels (40) zum Einfahren des Teleskoparms (10), wenn die spannungsbezogene Messung außerhalb eines vorbestimmten Bereichs liegt, ausgebildet ist.

2. Verkeilungsvorrichtung nach Anspruch 1, **dadurch gekennzeichnet, dass**
das Armspannungserfassungssystem (5) eine Federanordnung (60) und mindestens einen ersten Lagesensor (63A; 63C) aufweist;
wobei das erste Ende (13) des Teleskoparms (10) über die Federanordnung (60) an der Armhalterung (30) befestigt ist;
wobei die Federanordnung (60) dazu ausgebildet ist, einer Verfahrbewegung des ersten Endes (13) des Teleskoparms (10) in der Richtung (D) hin zu dem zweiten Ende (14) des Teleskoparms (10) entgegenzuwirken, und dass sie ferner aufweist:
- den mindestens einen Lagesensor (63A; 63C), der dazu ausgebildet ist, zu erfassen, ob eine relative Lage zwischen dem ersten Ende (13) und der Armhalterung (30) als die spannungsbezogene Messung innerhalb eines vorbestimmten Bereichs liegt.

3. Verkeilungsvorrichtung nach Anspruch 1, **dadurch gekennzeichnet, dass**
das Armspannungserfassungssystem (5) einen Spannungssensor (6) aufweist;
wobei der Spannungssensor (6) an dem Teleskoparm (10) angeordnet ist und zum Bestimmen einer Dehnung in dem Teleskoparm (10) als die spannungsbezogene Messung ausgebildet ist.

4. Verkeilungsvorrichtung nach Anspruch 3, **dadurch gekennzeichnet, dass** der Spannungssensor (6) ein Dehnungsmessstreifen ist.

5. Verkeilungsvorrichtung nach einem beliebigen der Ansprüche 1 bis 4, **dadurch gekennzeichnet, dass** das Steuerungssystem (70) zum Anstoßen einer Ausgabe eines Warnsignals ausgebildet ist, wenn die spannungsbezogene Messung außerhalb eines vorbestimmten Bereichs liegt.

6. Verkeilungsvorrichtung nach Anspruch 2, **gekennzeichnet durch** einen zweiten Lagesensor (63B; 63D), der zum Erfassen der relativen Lage zwischen dem ersten Ende (13) und der Armhalterung (30) in einem anderen Bereich als der erste Lagesensor (63A; 63C) ausgebildet ist.

7. Verkeilungsvorrichtung nach einem beliebigen der Ansprüche 1 bis 6, **dadurch gekennzeichnet, dass** das Verfahrantriebsmittel (40) ein hydraulisches System (45) ist, wobei das erste Glied (11) des Teleskoparms (10) ein Zylinder (16) und das zweite Glied (12) des Teleskoparms (10) ein Kolben (17) ist, wobei das Verfahrantriebsmittel (40) ferner eine Druckerzeugungsvorrichtung (42) aufweist, die zum Bereitstellen von Druckdifferenzen zwischen verschiedenen abgeschlossenen Räumen zwischen dem Zylinder (16) und dem Kolben (17) ausgebildet ist.

8. Verkeilungsvorrichtung nach einem beliebigen der Ansprüche 1 bis 6, **dadurch gekennzeichnet, dass** das Verfahrantriebsmittel (40) ein pneumatisches System ist, wobei das erste Glied (11) des Teleskoparms (10) ein Zylinder (16) und das zweite Glied (12) des Teleskoparms (10) ein Kolben (17) ist, wobei das Verfahrantriebsmittel (40) ferner eine Druckerzeugungsvorrichtung (42) aufweist, die zum Bereitstellen von Druckdifferenzen zwischen verschiedenen abgeschlossenen Räumen zwischen dem Zylinder (16) und dem Kolben (17) ausgebildet ist.

9. Verkeilungsvorrichtung nach einem beliebigen der Ansprüche 1 bis 6, **dadurch gekennzeichnet, dass** das Verfahrantriebsmittel (40) ein mechanisches System ist, wobei das Verfahrantriebsmittel (40) ferner einen Motor (140) aufweist, der zum Bereitstellen einer relativen Bewegung zwischen dem ersten Glied (11) des Teleskoparms (10) und dem zweiten Glied (12) des Teleskoparms (10) ausgebildet ist.

10. Verkeilungsvorrichtung nach Anspruch 7 oder 8, **dadurch gekennzeichnet, dass** das Steuerungssystem (70) auch mit dem Verfahrantriebsmittel (40) verbunden ist, wobei das Steuerungssystem (70) zum Aktivieren der Sicherheitsroutine in weiterer Abhängigkeit von den Druckdifferenzen in dem Verfahrantriebsmittel (40) ausgebildet ist.

11. Verkeilungsvorrichtung nach Anspruch 9, **dadurch gekennzeichnet, dass** das Steuerungssystem (70) auch mit dem Verfahrantriebsmittel (40) verbunden ist, wobei das Steuerungssystem (70) zum Aktivieren der Sicherheitsroutine in weiterer Abhängigkeit von Betriebszuständen des Motors (140) ausgebildet ist.

12. Verkeilungsvorrichtung nach einem beliebigen der Ansprüche 1 bis 11, **dadurch gekennzeichnet, dass** das erste Ende (13) des Teleskoparms (10) eine Endanschlagoberfläche (67) aufweist, von der sich ein Schaft (64) wegerstreckt, wobei die Armhalterung (30) eine Halterungsplatte (33) mit einem Loch (34) aufweist, durch welches der Schaft (64) verschiebbar angeordnet ist, und wobei der Schaft (64) einen Federstopper (61), der in einem Abstand (X) von der Anschlagoberfläche (67) angeordnet ist, und Tellerfedern (65), die zwischen dem Federstopper (61) und der Halterungsplatte (33) der Armhalterung (30) angebracht sind, aufweist.

13. Verfahren zum Bedienen einer Verkeilungsvorrichtung zum Verhindern von ungewollter Bewegung eines Straßenfrachtfahrzeugs in Zusammenhang mit dem Beladen/Entladen an einer Laderampe, umfassend den Schritt des:
- Bedienens eines Verfahrantriebsmittels zum teleskopischen Bewegen eines ersten Glieds eines Teleskoparms, der ausfahrbar bzw. einfahrbar ist, relativ zu einem zweiten Glied des Teleskoparms;
wobei der Teleskoparm durch ein erstes Ende an einer Armhalterung und durch ein dem ersten Ende entgegengesetztes zweites Ende an einem Keil befestigt ist und ein erstes Glied aufweist, das relativ zu einem zweiten Glied teleskopisch verfahrbar ist;
**gekennzeichnet durch** die weiteren Schritte des:
- Erfassens einer spannungsbezogenen Messung, welche eine Spannung in dem Teleskoparm abbildet; und
- Aktivieren einer Sicherheitsroutine in Abhängigkeit von der spannungsbezogenen Messung;
wobei die Sicherheitsroutine Einfahren des Teleskoparms (10) umfasst, wenn die spannungsbezogene Messung außerhalb eines vorbestimmten Bereichs liegt.

14. Verfahren nach Anspruch 13, **dadurch gekennzeichnet, dass** der Schritt des Aktivierens einer Sicherheitsroutine Anstoßen einer Ausgabe eines Warnsignals umfasst, wenn die spannungsbezogene Messung außerhalb eines vorbestimmten Bereichs liegt.

## Revendications

1. Appareil de calage (1) pour empêcher un mouvement non-intentionnel d'un véhicule de fret routier en association avec le chargement/déchargement sur un quai de chargement, comprenant :
- un bras télescopique (10) extensible et rétractable, respectivement, comprenant un premier élément (11) pouvant être déplacé de manière télescopique par rapport à un second élément (12) ;
- un moyen d'entraînement de déplacement (40) agencé pour déplacer ledit premier élément (11) de manière télescopique par rapport audit second élément (12) ;
- un bras de support (30) auquel une première extrémité (13) dudit bras télescopique (10) est fixée ; et
- une cale (20), fixée à une seconde extrémité (14), opposée à ladite première extrémité (13) dudit bras télescopique (10),
**caractérisé par**
- un système de détection de tension de bras (5) configuré pour obtenir une mesure liée à la tension représentant une tension dans ledit bras télescopique ; et
- un système de commande (70) connecté audit système de détection de tension de bras (5) et configuré pour activer une routine de sécurité en fonction de ladite mesure liée à la tension ;
dans lequel ledit système de commande (70) est configuré pour activer ledit moyen d'entraînement de déplacement (40) pour rétracter ledit bras télescopique (10) si ladite mesure liée à la tension tombe en-dehors d'une plage prédéterminée.

2. Appareil de calage selon la revendication 1, **caractérisé en ce que** ledit système de détection de tension de bras (5) comprend un agencement de ressort (60) et au moins un premier capteur de position (63A ; 63C) ; ladite première extrémité (13) dudit bras télescopique (10) étant fixée audit bras de support (30) par le biais dudit agencement de ressort (60) ;
ledit agencement de ressort (60) étant configuré pour parer un déplacement de ladite première extrémité (13) dudit bras télescopique (10) dans la direction (D) vers ladite seconde extrémité (14) dudit bras télescopique (10), et comprend en outre :
- ledit au moins un premier capteur de position (63A ; 63C) étant configuré pour détecter si une position relative entre ladite première extrémité (13) et ledit bras de support (30) en tant que ladite mesure liée à la tension est située dans une plage prédéterminée.

3. Appareil de calage selon la revendication 1, **caractérisé en ce que** ledit système de détection de tension de bras (5) comprend un capteur de tension (6) ;
ledit capteur de tension (6) étant agencé sur ledit bras télescopique (10) et configuré pour déterminer une tension dans ledit bras télescopique (10) comme étant ladite mesure liée à la tension.

4. Appareil de calage selon la revendication 3, **caractérisé en ce que** ledit capteur de tension (6) est un tensiomètre.

5. Appareil de calage selon l'une quelconque des revendications 1 à 4, **caractérisé en ce que** ledit système de commande (70) est configuré pour lancer l'émission d'un signal d'avertissement si ladite mesure liée à la tension tombe hors d'une plage prédéterminée.

6. Appareil de calage selon la revendication 2, **caractérisé par** un second capteur de position (63B ; 63D) configuré pour détecter ladite position relative entre ladite première extrémité (13) et ledit bras de support (30) dans une autre plage que ledit premier capteur de position (63A ; 63C).

7. Appareil de calage selon l'une quelconque des revendications 1 à 6, **caractérisé en ce que** ledit moyen d'entraînement de déplacement (40) est un système hydraulique (45), où ledit premier élément (11) dudit bras télescopique (10) est un cylindre (16) et ledit second élément (12) dudit bras télescopique (10) est un piston (17), ce par quoi ledit moyen d'entraînement de déplacement (40) comprend en outre un dispositif de pressurisation (42), configuré pour fournir des différences de pression entre différents volumes étanches entre ledit cylindre (16) et ledit piston (17).

8. Appareil de calage selon l'une quelconque des revendications 1 à 6, **caractérisé en ce que** ledit moyen d'entraînement de déplacement (40) est un système pneumatique, où ledit premier élément (11) dudit bras télescopique (10) est un cylindre (16) et ledit second élément (12) dudit bras télescopique (10) est un piston (17), ce par quoi ledit moyen d'entraînement de déplacement (40) comprend en outre un dispositif de pressurisation (42), configuré pour fournir des différences de pression entre différents volumes étanches entre ledit cylindre (16) et ledit piston (17).

9. Appareil de calage selon l'une quelconque des revendications 1 à 6, **caractérisé en ce que** ledit moyen d'entraînement de déplacement (40) est un système mécanique, ce par quoi ledit moyen d'entraînement de déplacement (40) comprend en outre un moteur (140), configuré pour fournir un mouvement relatif entre ledit premier élément (11) dudit bras télescopique (10) et ledit second élément (12) dudit bras télescopique (10).

10. Appareil de calage selon les revendications 7 à 8, **caractérisé en ce que** ledit système de commande (70) est également connecté audit moyen d'entraînement de déplacement (40), dans lequel ledit système de commande (70) est configuré pour activer ladite routine de sécurité plus encore en fonction desdites différences de pression dans ledit moyen d'entraînement de déplacement (40).

11. Appareil de calage selon la revendication 9, **caractérisé en ce que** ledit système de commande (70) est également connecté audit moyen d'entraînement de déplacement (40), dans lequel ledit système de commande (70) est configuré pour activer ladite routine de sécurité plus encore en fonction de conditions de fonctionnement dudit moteur (140).

12. Appareil de calage selon l'une quelconque des revendications 1 à 11, **caractérisé en ce que** ladite première extrémité (13) dudit bras télescopique (10) comprend une surface supérieure d'extrémité (67) de laquelle un arbre (64) s'étend, le support de bras (30) ayant une plaque de support (33) avec un trou (34) à travers lequel ledit arbre (64) est agencé en coulissement, et ledit arbre (64) ayant une butée à ressort (61) agencée à une distance (X) de ladite surface supérieure (67) et des ressorts à disque (65) montés entre ladite butée à ressort (61) et ladite plaque de support (33) dudit support de bras (30).

13. Procédé de fonctionnement d'un appareil de calage pour empêcher un mouvement non-intentionnel d'un véhicule de fret routier en association avec le chargement/déchargement sur un quai de chargement, comprenant l'étape de :
- faire fonctionner un moyen d'entraînement de déplacement pour déplacer de manière télescopique un premier élément d'un bras télescopique, extensible et rétractable, respectivement, par rapport à un second élément dudit bras télescopique ;
ledit bras télescopique étant fixé à un support de bras par une première extrémité et à une cale par une seconde extrémité, opposée à ladite première extrémité, qui comprend un premier élément pouvant être déplacé de manière télescopique par rapport à un second élément ;
**caractérisé par** les étapes ultérieures de ;
- détecter une mesure liée à la tension représentant une tension dans ledit bras télescopique ; et
- activer une routine de sécurité en fonction de ladite mesure liée à la tension ;
dans lequel ladite routine de sécurité comprend de rétracter ledit bras télescopique (10) si ladite mesure liée à la tension tombe en-dehors d'une plage prédéterminée.

14. Procédé selon la revendication 13, **caractérisé en ce que** ladite étape d'activation d'une routine de sécurité comprend de lancer l'émission d'un signal d'avertissement si ladite mesure liée à la tension chute en-dehors d'une plage prédéterminée.
